# EUROPÄISCHE PATENTANMELDUNG

(11) **EP 1 214 916 A1**
(43) Veröffentlichungstag der Anmeldung: **19.06.2002**
(21) Anmeldenummer: 01127655.7
(22) Anmeldetag: 20.11.2001
(51) Int. Cl.: A61C 5/02, A61C 17/02

(54) **Zahnärztliche Spülvorrichtung**

(30) Priorität: 12.12.2000 DE 10061699
(71) Anmelder: Ivoclar Vivadent AG, 9494 Schaan (LI)
(72) Erfinder: Senn, Bruno, 9470 Buchs (CH); Bopp, Gabriela, Dr., 6811 Göfis (AT); Radl, Andreas, Dr., 9494 Schaan (LI)
(74) Vertreter: Baronetzky, Klaus, Dipl.-Ing.

(57) **Zusammenfassung**

Eine Spülvorrichtung für Hohlräume in einem Zahn oder Restaurationsteil weist eine Zuflussleitung auf, die in einem Arbeitsraum mündet, und eine Abflussleitung, die von dem Arbeitsraum wegführt. Der Arbeitsraum ist mit dem Hohlraum über eine Flüssigkeit verbunden, wobei ein Schwingungserzeuger auf die Spülflüssigkeit wirkt, die sich in dem Arbeitsraum und in dem Hohlraum befindet. Der Arbeitsraum ist insbesondere zusammen mit dem Schwingungserzeuger über einen Adapter (28) auf dem Zahn oder Restaurationsteil abgestützt. In dem Arbeitsraum liegt insbesondere Unterdruck gegenüber dem Zahn oder Restaurationsteil vor.

## Beschreibung

Die Erfindung betrifft eine Spülvorrichtung für Hohlräume, und zwar insbesondere in einem Zahn oder Restaurationsteil, der bzw. das für die Behandlung vorbereitet werden soll, gemäß dem Oberbegriff von Anspruch 1, sowie eine Spülvorrichtung gemäß dem Oberbegriff von Anspruch 16.

Eine derartige Spülvorrichtung ist aus der DE 44 21 503 A1 bekannt. Bei dieser Spülvorrichtung soll Spülflüssigkeit durch einen Arbeitsraum geleitet werden. Der Arbeitsraum ist mit einem Druckwechselgenerator verbunden. Über eine Verbindungleitung steht der Arbeitsraum mit einer Zahnhöhle in Verbindung, wobei mittels Dichtungsmasse eine Abdichtung vorgenommen werden soll. Für die Bereitstellung der erwünschten Strömung der Spülflüssigkeit durch den Arbeitsraum ist es vorgesehen, ein Zulauf- und ein Ablaufgefäß in einer solchen Weise zu positionieren, dass die potientielle Energie der Spülflüssigkeit in dem Zulaufgefäß den Flüssigkeitsaustausch in dem Arbeitsraum bereitstellt.

Bezogen auf die Umgebung, also den atmosphärischen Druck, kann dementsprechend im Arbeitsraum Unterdruck oder Überdruck vorliegen, je nachdem, wie das Zulaufgefäß und das Ablaufgefäß positioniert sind.

Andererseits steht bei dieser Lösung der Hohlraum zwar in Flüssigkeitsverbindung mit dem Arbeitsraum. Die aus praktischen Gründen flexible Verbindungsleitung kann in beliebiger geeigneter Weise verlaufen, so dass der Arbeitsraum jedenfalls über oder unter dem Hohlraum positioniert ist, wobei er in den meisten Anwendungsfällen oberhalb des Hohlraums positioniert wird. Hierdurch ist zwar eine gewisse Freiheit bei der Handhabung gewährleistet. Andererseits liegen jedoch keine definierten Druckverhältnisse im Hohlraum vor.

Bei der dargestellten Lösung ist der dortige Druckwechselgenerator so ausgelegt, dass intensive Druckwellen entstehen, die sogar Kavitationen erzeugen sollen. Dies führt aber zu erheblichen Druckwellen, die sich in den Hohlraum fortpflanzen.

Andererseits ist es wichtig, dass gerade die Wurzelkanäle im Bereich der Apex vollständig von Geweberesten gereinigt werden, nachdem das Restaurationsergebnis stark davon abhängt, wie sauber gearbeitet wird.

Ein allzu langes Spülen wird vom Patienten als unangenehm empfunden und trägt nicht zur Akzeptanz der verwendeten Technik bei, so dass es vor dem Hintergrund dieser Überlegungen wünschenswert ist, eine möglichst rasche und intensive Spülung zu gewährleisten.

Andererseits ist gerade die Apex eines Zahns besonders empfindlich. Es besteht die Gefahr, dass verunreinigte Spülflüssigkeit in feine Kanäle und Fissuren eindringt und dort auch durch intensiven Austausch mit der Spüllösung nicht mehr entfernt werden kann.

Ferner ist es bereits einmal vorgeschlagen worden, einen Spülkopf direkt auf einen Zahn zu montieren und die Spülkanäle durch eine Bohrung in dem Zahn in den Hohlraum verlaufen zu lassen. Diese Lösung weist jedoch den Nachteil auf, dass die Spülflüssigkeit durch die Strömung auch tief in die Apex eindringt. Das Ergebnis des Spülvorgangs hängt zudem recht stark von der Strömung selbst ab, so dass feiner verästelte Wurzelkanäle weniger intensiv gespült werden und größere Hohlräume dafür umso intensiver. Bei dieser Lösung müsste daher der Zahnarzt sicherheitshalber besonders lange spülen, was aus verschiedenen Gründen unerwünscht ist.

Demgegenüber liegt der Erfindung die Aufgabe zugrunde, eine Spülvorrichtung gemäß dem Oberbegriff von Anspruch 1, sowie eine Spülvorrichtung gemäß dem Oberbegriff von Anspruch 16 zu schaffen, die eine verbesserte Reinigung gerade auch feinster Kanäle im Apex-Bereich ermöglicht, aber dennoch bedienungssicher und leicht zu handhaben ist.

Diese Aufgabe wird erfindungsgemäß durch Anspruch 1 bzw. Anspruch 16 gelöst. Vorteilhafte Weiterbildungen ergeben sich aus den Unteransprüchen.

Mit der erfindungsgemäßen Lösung lässt sich durch die Verwendung eines geschlossenen Systems zunächst ein definierter Innendruck bereitstellen, der vermeidet, dass durch Überdruck im Arbeitsraum Spülflüssigkeit, die mit Verunreinigungen versehen wird, noch weiter in feine Kanäle hineingedrückt wird. Durch die Maßnahme, den Arbeitsraum direkt auf dem Zahn oder Restaurationsteil abzustützen, ist gewährleistet, dass auch zwischen Hohlraum und Arbeitsraum stets nur ein definierter und geringer Druckunterschied besteht.

Erfindungsgemäß besonders günstig ist es, dass der Adapter auf dem Zahn oder Restaurationsteil abgestützt ist, so dass eine sichere mechanische Verbindung gewährleistet ist, die ein effizientes Spülen ermöglicht. Die Verbindungsleitung kann vollständig entfallen, so dass der Austausch zwischen verbrauchter und frischer Spüllösung über einen erheblich verkürzten Abstand erfolgen kann, der beispielsweise anstelle von mehreren Dezimetern lediglich einige Millimeter betragen kann. Überraschend lässt sich der erfindungsgemäße Schwingungserzeuger unmittelbar in Nachbarschaft des Zahns oder Restaurationsteils, also in der Regel im Mund der Patienten, unterbringen. Damit ergibt sich eine automatische Relativpositionierung zwischen Hohlraum und Arbeitsraum.

Durch den besonders vorteilhaft vorgesehenen Unterdruck wird zudem die Abdichtung zwischen dem Adapter und dem Zahn oder Restaurationsteil verbessert; der Adapter wird praktisch im Dichtbereich durch den Unterdruck an den Zahn zusätzlich angesaugt.

Gemäß einer besonders vorteilhaften Ausgestaltung ist es vorgesehen, den Zahn oder das Restaurationsteil mit einer konischen Öffnung zu versehen, die genau zu dem Adapter passt. Bevorzugt ist hierzu ein genau dimensionierter Bohrer vorgesehen, mit welchem die Öffnung reproduzierbar erzeugt werden kann. Zusätzlich weist der Adapter an seinem konischen Außenumfang eine Elastomerdichtung auf, beispielsweise eine Beschichtung aus Gummi. Der Konuswinkel ist bevorzugt so gewählt, dass der Adapter samt Arbeitsraum und Schwingungserzeuger, also die gesamte Arbeitseinheit, einmal aufgedrückt selbsthaltend auf dem Zahn oder Restaurationsteil verbleibt, aber nach Abschluss des Spülvorgangs auch ohne weiteres abgezogen werden kann.

In vorteilhafter Ausgestaltung der Erfindung ist es vorgesehen, im Arbeitsraum ein Hindernis, beispielsweise eine Schwelle, für die Durchströmung zwischen Zuflussleitung und Abflussleitung vorzusehen. Durch dieses Hindernis entstehen zusätzliche Turbulenzen, die dem verbesserten Austausch zwischen Arbeitsraum und Hohlraum über den Adapterkanal dient. Hierdurch wird die Wirkung des Schwingungserzeugers unterstützt, ohne dass eine erzwungene Strömung unmittelbar in den Adapterkanal eingeleitet würde.

Die erfindungsgemäße Lösung hat den besonderen Vorteil, dass nicht nur keine Schmierschichten wie bei der mechanischen Entfernung von Zahnwurzelgewebe entstehen, sondern darüber hinaus auch Reste aus feinsten Kanälen gelöst und abgeführt werden können. Es versteht sich, dass mit einer geeigneten Spülflüssigkeit wie Natriumhypochlorit das Spülen verbessert werden kann.

Dies wird besonders gefördert durch den Unterdruck innerhalb der gesamten Spülvorrichtung gegenüber der Umgebung, der beispielsweise 150 Millibar betragen kann. Durch Einstellung des Arbeitsunterdrucks zwischen Zuflussleitung und Abflussleitung in Kombination mit der Frequenz des Schwingungserzeugers lässt sich die Spülwirkung an die Erfordernisse anpassen. In diesem Zusammenhang ist es besonders günstig, wenn während des Spülvorgangs zunächst mit einer geringeren Frequenz und einem geringeren Arbeitsunterdruck und dann mit einem höherem Arbeitsunterdruck und einer höheren Frequenz gearbeitet wird. Hierdurch wird zunächst der Hauptteil des Wurzelgewebes entfernt, ohne dass durch die Spülung der Bereich der Apex beaufschlagt würde.

In einem weiteren Spülschritt wird dann der Arbeitsdruck erhöht und zugleich auch die Frequenz des Schwingungsgenerators. Hierdurch entsteht eine stärkere Strömung und kleinere Bläschen gelangen tiefer bis in den Bereich der Apex. Die stärkeren Turbulenzen und Bläschenbewegungen führen dazu, dass auch die zuvor nicht erreichten Reste von Wurzelgewebe entfernt werden.

In einer vorteilhaften Ausgestaltung der Erfindung weist der Schwingungserzeuger einen Elektromotor auf, auf dessen Achse ein Exzenter angebracht ist, der über eine Verbindungsstange mit der Membran in Verbindung steht. Bevorzugt ist sowohl die Verbindung zwischen der Verbindungsstange und dem Exzenter als auch die Flanschverbindung zwischen dem Elektromotor und der Arbeitseinheit im übrigen lösbar. Die Arbeitseinheit kann dann als Wegwerfteil ausgebildet sein, so dass eine Reinigung nicht erforderlich ist.

In vorteilhafter Ausgestaltung ist die Steuerung des Systems über eine zentrale Steuereinheit vorgesehen. Über Druck-, Durchfluss- und Temperatursensoren werden alle wichtigen Parameter der Spülvorrichtung überwacht, und bei einer Fehlfunktion wird der entsprechende Fehler signalisiert.

Beispielsweise kann auch über einen Stromsensor des den Elektromotor durchtretenden Stroms festgestellt werden, dass der Motor weder blockiert noch im Leerlauf arbeitet, indem ein vorgegebenes Stromfenster überwacht wird.

Weitere Vorteile, Einzelheiten und Merkmale ergeben sich aus der nachfolgenden Beschreibung einer Ausführungsform anhand der Zeichnung.

Es zeigen:
- Fig. 1: eine schematische Ansicht einer erfindungsgemäßen Spülvorrichtung; und
- Fig. 2: eine vergrößerte Schnittansicht einer Arbeitseinheit für die Spülvorrichtung gemäß Fig. 1.

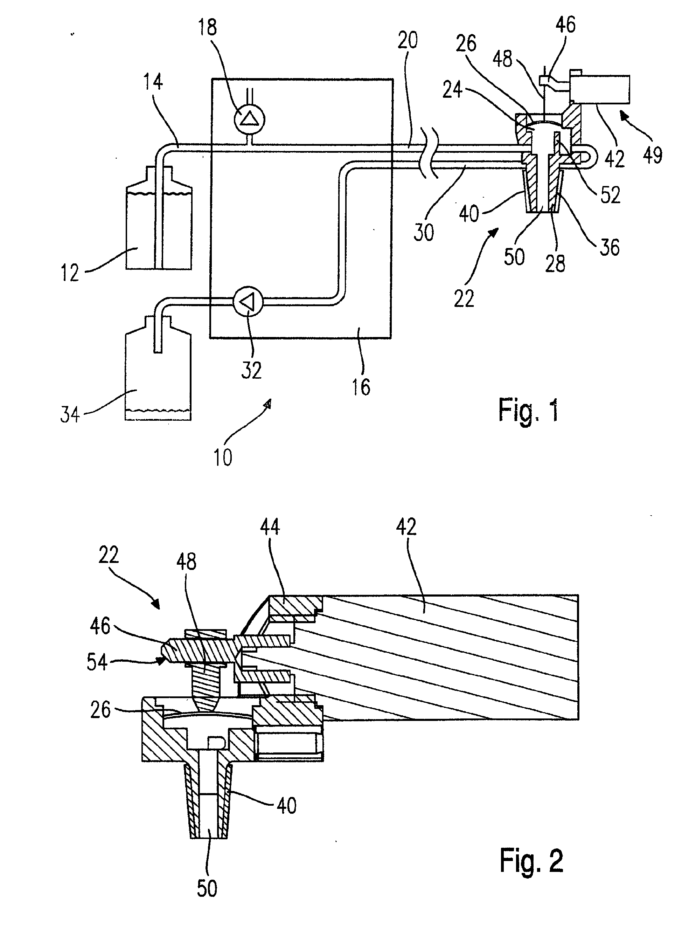

In Fig. 1 ist eine Ausführungsform einer erfindungsgemäßen Spülvorrichtung 10 schematisiert dargestellt. Die Spülvorrichtung weist ein geschlossenes Spülsystem auf. Hierzu weist ein Vorratsbehälter 12 einen Vorrat an Spülflüssigkeit auf. Der Vorratsbehälter ist über eine Leitung 14 mit einer Steuereinheit 16 verbunden. In dem dargestellten Ausführungsbeispiel ist dort eine Pumpe 18 vorgesehen, die die Leitung 14 unter Unterdruck setzt, und zwar gegenüber der Umgebung.

Die Leitung 14 verläuft als Zuflussleitung 20 zu der erfindungsgemäßen Arbeitseinheit 22. Dort mündet sie an einen Arbeitsraum 24. Der Arbeitsraum 24 ist nach oben von einer Membran 26 begrenzt. Nach unten erstreckt sich vom Arbeitsraum 24 ein Adapter 28 der Arbeitseinheit 22. Die Spülflüssigkeit gelangt durch den Arbeitsraum 24 hindurch zu einer Abflussleitung 30, die zur Steuereinheit 16 zurückführt. In dem dargestellten Ausführungsbeispiel ist an dieser Stelle eine weitere Pumpe 32 vorgesehen, die als Arbeitspumpe agiert und den Arbeits-Unterdruck für das Spülen bereitstellt. Von dort gelangt die Spülflüssigkeit in einen Aufnahmebehälter 34, der die gleiche Größe wie der Vorratsbehälter 12 aufweist.

Für die Behandlung eines Zahns oder Restaurationsteils wird zunächst mit einem in den Zeichnungen nicht dargestellten Spezialbohrer eine konische Öffnung in dem Zahn erzeugt. Hier und im folgenden wird der Einfachheit halber auf einen Zahn Bezug genommen, auch wenn es sich versteht, dass ein beliebiges geeignetes und zu spülendes Restaurationsteil entsprechend ebenfalls gereinigt werden kann. Der Spezialbohrer weist eine Bohrspitze zur Zentrierung und anschließend hieran einen definierten Außenkonus auf, der der konischen Außenfläche 36 des Adapters 28 entspricht. Nach oben hin ist der Bohrer von einer flachen Platte abgeschlossen, die ein zu tiefes Einbohren verhindert.

Nach Herstellung der Öffnung wird der Adapter 28 in die Öffnung eingesetzt. Die Außenfläche 36 weist eine Dichtung 40 auf, die einerseits einen guten Halt in der Öffnung gibt und andererseits abdichtet, so dass keine Fehlluft eintreten kann. In diesem Zustand ist der Adapter nun bereit, die Flüssigkeitsverbindung zwischen Arbeitsraum 24 und dem Hohlraum des Zahns herzustellen. Hierzu werden die Pumpen 18 und 32 eingeschaltet, so dass zunächst das gesamte System unter Unterdruck gesetzt wird und dann Spülflüssigkeit aus dem Vorratsbehälter 12 angesaugt werden kann. Wenn keine Undichtigkeit vorliegt, kann die Pumpe 18 dann abgeschaltet werden, so dass keine Spülflüssigkeitsverluste entstehen.

Sobald die Spülflüssigkeit den Adapter erreicht hat, wird ein Elektromotor 42 eingeschaltet. Der Elektromotor 42 ist über einen Flansch 44 an die Arbeitseinheit 22 angeschlossen und weist einen Exzenter 46 auf, der auf eine Verbindungsstange 48 wirkt. Die Verbindungsstange 48 ist an die Membran 26 angeschlossen, so dass durch das Einschalten des Elektromotors 42 der so gebildete Schwingungserzeuger 49 angeregt wird. Durch die Schwingungsbeaufschlagung entstehen Turbulenzen und Bläschen im Arbeitsraum 24 und im Adapterkanal 50 des Adapters 28. Durch den Adapterkanal 50 gelangen sie auch in den Hohlraum in dem Zahn bis hin zum Apex, so dass sie dort für den Abtransport von Wurzelgewebe sorgen können. Zugleich besteht durch die Wirkung der Arbeitspumpe 32 eine Strömung der Spülflüssigkeit quer durch den Arbeitsraum 24. Diese Strömung verläuft jedoch nicht linear, sondern durch eine gezielte Schwelle 52 turbulent. Die entstehenden Turbulenzen reichen für die erwünschte Spülung aus.

Einzelheiten der Arbeitseinheit 22 sind aus Fig. 2 ersichtlich. Dort werden die gleichen Bezugszeichen wie in Fig. 1 verwendet, so dass eine weitere Erläuterung entbehrlich ist. In der Darstellung gemäß Fig. 2 ist besser ersichtlich, dass der Elektromotor 42 über den Flansch 44 eingeschraubt an der Arbeitseinheit 22 gehalten ist. Dementsprechend weist der Exzenter 46 bevorzugt Einführschrägen 54 auf, um die Einführung in die Ausnehmung der Verbindungsstange 48 zu erleichtern.

Ferner ist es möglich, die erfindungsgemäße Spülvorrichtung zu Bleichzwecken einzusetzen. Hierzu wird anstelle der Spülflüssigkeit eine Bleichlösung wie Wasserstoffsuperoxid zugeführt und hierdurch das erwünschte Bleichen oder Bleachen gewährleistet.

Gemäß einer alternativen Ausgestaltung der erfindungsgemäßen Spülvorrichtung ist es vorgesehen, die Spülvorrichtung für das Reinigen und/oder Bleichen im Dentalbereich, jedoch außerhalb einer Zahnkavität, einzusetzen. Beispielsweise lassen sich mit der erfindungsgemäßen Lösung gut auch Zahntaschen reinigen. Hierzu ist der Adapter mit einer elastischen Dichtlippe versehen, die eine Abdichtung gegenüber dem Bereich der Zahntasche ermöglicht. Die Abdichtung wird durch den erfindungsgemäß in vorteilhafter Weise vorliegenden Unterdruck begünstigt.

Es ist auch möglich, den Adapter so zu gestalten, dass er einen Zahn oder eine Zahnrestauration ganz oder teilweise umgibt und der Spülvorrichtung Bleichlösung zuzuführen, so dass zum Beispiel der Zahn intensiv und insbesondere gleichmäßig gebleicht wird.

In einer weiteren Ausgestaltung ist es vorgesehen, ein Dentalhilfsmittel, ein Dentalwerkzeug oder dergleichen mit der erfindungsgemäßen Spülvorrichtung einer Reinigung zu unterziehen, wobei dann ebenfalls entsprechende Adapter erforderlich sind.

## Patentansprüche

1. Spülvorrichtung für Hohlräume in einem Zahn oder Restaurationsteil, mit einer Zuflussleitung, die in einem Arbeitsraum mündet, und einer Abflussleitung, die von dem Arbeitsraum wegführt, wobei der Arbeitsraum mit dem Hohlraum über eine Flüssigkeit verbunden ist, und mit einem Schwingungserzeuger, der auf die Spülflüssigkeit wirkt, die sich in dem Arbeitsraum und in dem Hohlraum befindet, **dadurch gekennzeichnet, dass** der Arbeitsraum (24), insbesondere zusammen mit dem Schwingungserzeuger, über einen Adapter (28) auf dem Zahn oder Restaurationsteil abgestützt ist und in dem Arbeitsraum (24) insbesondere Unterdruck gegenüber dem Zahn oder Restaurationsteil vorliegt.

2. Spülvorrichtung nach Anspruch 1, **dadurch gekennzeichnet, dass** die Zuflussleitung und die Abflussleitung des Arbeitsraums (24) unter Unterdruck gegenüber der Umgebung stehen.

3. Spülvorrichtung nach einem der vorhergehenden Ansprüche, **dadurch gekennzeichnet, dass** der Adapter (28) einen Außenkonus aufweist, der in eine insbesondere konische Öffnung in dem Zahn oder Restaurationsteil passt.

4. Spülvorrichtung nach Anspruch 3, **dadurch gekennzeichnet, dass** der Adapter (28) eine Dichtung (40) aufweist, die für das Anliegen an der Ausnehmung bestimmt ist.

5. Dentalbehandlungsvorrichtung, **gekennzeichnet durch** die Verwendung einer Spülvorrichtung (10) gemäß einem der vorhergehenden Ansprüche, und mit einem Bohrer, der eine insbesondere konische Außenfläche (36) aufweist und für die Erzeugung der Ausnehmung in dem Zahn oder dem Restaurationsteil bestimmt ist.

6. Spülvorrichtung nach einem der vorhergehenden Ansprüche, **dadurch gekennzeichnet, dass** die mit Spülflüssigkeit in einem gegenüber der Umgebung hermetisch geschlossenen System aufbewahrt ist und eine Pumpe (18) einen Unterdruck, insbesondere von 50 bis 500 und bevorzugt etwa 150 mbar gegenüber der Umgebung bereitstellt.

7. Spülvorrichtung nach Anspruch 6, **dadurch gekennzeichnet, dass** eine weitere Pumpe (32) einen Differenzdruck zwischen Zuleitung und Ableitung herstellt, der insbesondere geringer als der Unterdruck gegen der Umgebung ist und bevorzugt etwa 50 bis 100 mbar beträgt.

8. Spülvorrichtung nach einem der vorhergehenden Ansprüche, **dadurch gekennzeichnet, dass** an den Arbeitsraum eine Membran (26) angrenzt, die Teil des Schwingungserzeugers ist oder mit diesem verbunden ist.

9. Spülvorrichtung nach einem der vorhergehenden Ansprüche, **dadurch gekennzeichnet, dass** der Arbeitsraum (24) so gestaltet ist, dass bei Aktivierung der Pumpe (18), aber ohne Aktivierung des Schwingungserzeugers im wesentlichen keine Strömung zwischen Hohlraum und Arbeitsraum (24) besteht.

10. Spülvorrichtung nach einem der vorhergehenden Ansprüche, **dadurch gekennzeichnet, dass** der Schwingungserzeuger Bläschen in der Spülflüssigkeit erzeugt, die durch einen Adapterkanal (50) geleitet werden und eine Spülwirkung entfalten.

11. Spülvorrichtung nach einem der vorhergehenden Ansprüche, **dadurch gekennzeichnet, dass** der Adapterkanal (50) frei von einer durch eine Pumpe induzierten Strömung ist.

12. Spülvorrichtung nach einem der vorhergehenden Ansprüche, **dadurch gekennzeichnet, dass** als Antrieb für den Schwingungserzeuger ein Elektromotor (42) mit Exzenter (46), ein Piezzo-Schwingungserzeuger und/oder ein Elektromagnet vorgesehen ist.

13. Spülvorrichtung nach einem der vorhergehenden Ansprüche, **dadurch gekennzeichnet, dass** der Adapter (28) mit seinem Adapterkonus in der Ausnehmung selbsthaltend ist.

14. Spülvorrichtung nach einem der vorhergehenden Ansprüche, **dadurch gekennzeichnet, dass** durch den Schwingungserzeuger in dem Flüssigkeitsstrom durch den Arbeitsraum (24) Turbulenzen erzeugbar sind, die dem Flüssigkeitsaustausch entlang des Adapterkanals (50) dienen.

15. Spülvorrichtung nach einem der vorhergehenden Ansprüche, **dadurch gekennzeichnet, dass** die Spülflüssigkeit Natriumhypochlorit aufweist.

16. Spülvorrichtung für Bereiche an einem Zahn oder einem Restaurationsteil, insbesondere für eine Zahntasche, mit einer Zuflussleitung, die in einem Arbeitsraum mündet, und einer Abflussleitung, die von dem Arbeitsraum wegführt, wobei der Arbeitsraum mit dem Bereich über eine Flüssigkeit verbunden ist, und mit einem Schwingungserzeuger, der auf die Spülflüssigkeit wirkt, die sich in dem Arbeitsraum und dem Bereich befindet, **dadurch gekennzeichnet, dass** der Arbeitsraum (24), insbesondere zusammen mit dem Schwingungserzeuger, über einen Adapter (28) über dem Bereich abgestützt ist und in dem Arbeitsraum (24) insbesondere Unterdruck gegenüber dem Zahn oder Restaurationsteil oder der Zahntasche vorliegt.

17. Spülvorrichtung nach Anspruch 16, **dadurch gekennzeichnet, dass** die Abstützung über dem Bereich über eine elastische Dichtlippe erfolgt und der Adapter durch den Unterdruck an den Bereich angesaugt wird.

18. Spülvorrichtung nach einem der Ansprüche 16 oder 17, **dadurch gekennzeichnet, dass** für die Spülvorrichtung eine Bleichlösung verwendet wird, die insbesondere H₂O₂ aufweist und mit welcher ein Zahn oder Restaurationsteil bleichbar ist.
